# EUROPEAN PATENT SPECIFICATION

(11) **EP 4 101 579 B1**
(45) Date of publication and mention of the grant of the patent: **10.04.2024**
(21) Application number: 21190238.2
(22) Date of filing: 09.08.2021
(51) Int. Cl.: B23K 26/06, B23K 26/067, B23K 26/20, B23K 26/242, B23K 26/28, B23K 26/32, H01M 50/169, B23K 31/00, B23K 101/04, B23K 101/36, B23K 103/10

(54) **METHOD OF WELDING A BATTERY COVER PLATE USING TWO DIFFERENT LASER BEAM CONDITIONS**
SCHWEISSVERFAHREN EINER BATTERIEABDECKPLATTE UNTER VERWENDUNG VON ZWEI UNTERSCHIEDLICHEN LASERSTRAHL-BEDINGUNGEN
PROCÉDÉ DE SOUDAGE DE PLAQUE DE COUVERCLE DE BATTERIE EN UTILISANT DEUX CONDITIONS DIFFÉRENTES POUR LES FAISCEAUX LASER

(30) Priority: 07.06.2021 CN 202110631128
(43) Date of publication of application: 14.12.2022
(73) Proprietor: CALB Technology Co., Ltd., Changzhou City, Jiangsu Province (CN); CALB Co., Ltd., Changzhou City, Jiangsu Province (CN)
(72) Inventor: ZENG, Tianxing, Changzhou City (CN); SONG, Ruxin, Changzhou City (CN); LI, Xiaopo, Luoyang City (CN); FAN, Yanliang, Changzhou City (CN)
(74) Representative: Becker, Eberhard

(56) References cited:
- JP-A- 2015 163 412
- US-A1- 2011 240 613
- US-A1- 2015 349 303

## Description

### BACKGROUND

### Technical Field

The disclosure relates to a technical field of battery production and manufacturing, and in particular, relates to a welding method of a battery cover plate according to the preamble of claim 1 (see for example JP 2015 163412 A).

### Description of Related Art

Regarding electric vehicle relying on new energy, aluminum is adopted mostly for making the shell of the power battery. The price of aluminum shell is slightly higher than that of steel shell, but the aluminum shell has abundant resource supply, large scale manufacturing, advanced process, low environmental impact, energy saving and emission reduction, and high profitability. In the process of manufacturing and assembling of lithium battery of square aluminum shell, the laser welding process is required to be applied. Advantages of laser welding include high energy density, high precision, stable power and so on, and laser welding plays an irreplaceable role in the production and assembly process of the square aluminum shell. The top cover sealing laser welding is a packaging process in which a cover plate and an aluminum shell are laser welded in a clamping fixture to seal the battery.

At present, in the related art, thin-walled aluminum shell is widely applied because the thin-walled aluminums shell may provide increased battery capacity and reduced volume and weight of battery pack. However, during the welding process of the cover plate and shell of the battery, a welded piece may be deformed as affected by the uneven temperature field. That is, the shell may be considerably deformed when the shell is thinner.

Specifically, in the related art, the thin-walled aluminum shell and the cover plate are welded by high-power laser. The part of the base material that is melted by the high temperature of the laser is molten metal pool. When the molten metal pool moves from the welded high-temperature melting zone to the unwelded low-temperature zone, in the case that the molten metal pool is partially heated and expands, it is compressed by the unheated part. In the subsequent cooling and contracting process, as the molten metal pool is stretched by the unheated part, the size of the shell itself changes after welding is performed, and in the end, the shell may have large wavy edge, which may lead to battery swelling and indentations.

### SUMMARY

According to a first aspect, the present invention provides a welding method of a battery cover plate as defined in claim 1, comprising the following steps. At least two times of continuous welding are performed along a connecting zone between a cover plate and a shell. Welding power of a first continuous welding is less than welding power of a second continuous welding. Laser welding power, welding speeds, and defocusing amounts are adjusted. An amount of deformation of the shell is less than or equal to 0.6mm after the first continuous welding, and the amount of deformation of the shell is less than or equal to 1.0mm after the second continuous welding.

Further preferred aspects of the present invention are defined in the dependent claims.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic view illustrating positions of two times of continuous welding on a cover plate and a shell in a welding method of a battery cover plate according to an exemplary embodiment.
FIG. 2 is a schematic view illustrating positions of two times of continuous welding on the cover plate and the shell in the welding method of the battery cover plate according to another exemplary embodiment.
FIG. 3 is a schematic view illustrating positions of two times of continuous welding on the cover plate and the shell in the welding method of the battery cover plate according to another exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

### Embodiment One

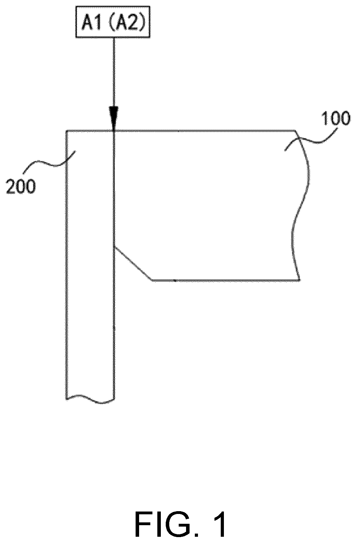

With reference to FIG. 1, which represents a schematic view illustrating positions of two times of continuous welding on a cover plate 100 and a shell 200 in a welding method of a battery cover plate according to the disclosure. In this exemplary embodiment, the welding method of the battery cover plate provided by the disclosure is described by treating the welding of an aluminum shell and the cover plate 100 applied to a vehicle battery as an example. A person having ordinary skill in the art should easily understand that, in order to apply the relevant design of the disclosure to other types of cover plate welding processes of batteries, various modifications, additions, substitutions, deletions, or other changes may be made to the following specific embodiments, and these changes still fall within the scope of the principle of the welding method of the battery cover plate provided by the disclosure.

As shown in FIG. 1, in this embodiment, the welding method of the battery cover plate provided by the disclosure includes performing two times of continuous welding along a connecting zone between the cover plate 100 and the shell 200, where welding power of a first continuous welding is less than welding power of a second continuous welding. Then, by adjusting laser welding power, welding speeds, and defocusing amounts, an amount of deformation of the shell 200 is less than or equal to 0.6mm after the first continuous welding, and the amount of deformation of the shell 200 is less than or equal to 1.0mm after the second continuous welding. Accordingly, in the welding method of the battery cover plate provided by the disclosure, positions of the cover plate 100 and the shell 200 are fixed through the first continuous welding having less power, and overall welding of the cover plate 100 and the shell 200 is achieved through the second continuous welding having greater power. In other words, the first continuous welding is equivalent to pre-welding, and the second continuous welding is equivalent to final welding. Through the foregoing design, in the disclosure, since the first continuous welding having less power is adopted, during the second continuous welding having greater power, deformation of the shell 200 after welding may be effectively alleviated, and the shell 200 is prevented from being welded through to avoid damage of the cell. Besides, a welded seam zone is well formed, thus high welding strength is provided, and safety of the battery is improved.

Optionally, in this embodiment, before the first continuous welding is performed, spot welding may be performed along a connecting seam between the cover plate 100 and the shell 200. Spot welding is discontinuous small-area welding which is performed at the position of the connecting seam. Through the foregoing process design, the cover plate 100 and the shell 200 may be securely fixed in the first continuous welding, and a yield of the first continuous welding may also be improved.

In this embodiment, a ratio of the welding power of the first continuous welding to the welding power of the second continuous welding may be 0.3: 1 to 0.8: 1, such as 0.3: 1, 0.4: 1, 0.6: 1, 0.8: 1, etc. In other embodiments, embodiments not covered by the present invention, on the basis of the welding power of the first continuous welding being less than the welding power of the second continuous welding, the ratio of the welding power of the first continuous welding to the welding power of the second continuous welding may be less than 0.3: 1 or may be greater than 0.8: 1, such as 0.2: 1, 0.85: 1, etc. Through the foregoing design, in the disclosure, deformation of the battery shell 200 may be effectively alleviated when welding is performed.

Optionally, in this embodiment, a range of penetration depth of the first continuous welding may be 0.6mm to 0.8mm, such as 0.6mm, 0.7mm, 0.8mm, etc. Further, a range of penetration depth of the second continuous welding may be greater than 0.8mm, such as 0.9mm, 1.1mm, etc. In other embodiments, the penetration depth of the first continuous welding may also be less than 0.6mm or may be greater than 0.8mm, such as 0.5mm and 0.9mm, and the penetration depth of the second continuous welding is greater than the penetration depth of the first continuous welding. Through the foregoing design, in the disclosure, the shell 200 and the cover plate 100 may exhibit high welding strength, and safety of the battery is accordingly improved.

Optionally, in this embodiment, welding power parameters of continuous welding include optical fiber power. Based on the above, a ratio of optical fiber power of the first continuous welding to optical fiber power of the second continuous welding may be 0.3: 1 to 0.8: 1, such as 0.3: 1, 0.4: 1, 0.6: 1, 0.8: 1, etc. Herein, different optical fiber power of welding leads to different penetration depth of a formed welded seam. When the power increases, the penetration depth grows as well. When the welding power is excessively small, it is easy to form pseudo welding or broken welding at the welded seam, or a weak fixing strength may be provided, such that the shell may not be prevented from being deformed. When the welding power is excessively large, the shell is prone to deformation.

Optionally, in this embodiment, the welding power parameters of continuous welding include the optical fiber power. Based on the above, the optical fiber power of the first continuous welding may be 400W to 600W, such as 400W, 450W, 550W, 600W, etc. In other embodiments, according to welding needs of the cover plate 100 and the shell 200 of different sizes (e.g., thickness) in different types of batteries, the optical fiber power of the first continuous welding may also be less than 400W or may be greater than 600W, such as 350W, 700W, etc., which is not limited to the embodiment.

Further, based on the process design in which the optical fiber power of the first continuous welding may be 400W to 600W, in this embodiment, the optical fiber power of the first continuous welding may be 500W

Optionally, in this embodiment, on the basis of the welding power of the first continuous welding being less than the welding power of the second continuous welding, the optical fiber power of the second continuous welding may be 650W to 850W, such as 650W, 700W, 800W, 850W, etc. In other embodiments, according to welding needs of the cover plate 100 and the shell 200 of different sizes (e.g., thickness) in different types of batteries, the optical fiber power of the second continuous welding may also be less than 650W or may be greater than 850W, such as 600W, 900W, etc., which is not limited to the embodiment.

Further, based on the process design in which the optical fiber power of the second continuous welding is 650W to 850W, in this embodiment, the optical fiber power of the second continuous welding may be 760W.

Optionally, in this embodiment, the welding power parameters of continuous welding include semiconductor power. Based on the above, semiconductor power of the first continuous welding may be 850W to 1,100W, such as 850W, 900W, 1,000W, 1,100W, etc. Accordingly, in the disclosure, through the design of the semiconductor power, a wider molten metal pool may be formed, and stiffness of the welded seam accordingly increases. When the semiconductor power rises, the width of the formed molten metal pool increases. In other embodiments, according to welding needs of the cover plate 100 and the shell 200 of different sizes (e.g., thickness) in different types of batteries, the semiconductor power of the first continuous welding may also be less than 850W or may be greater than 1,100W, such as 850W, 1,150W, etc., which is not limited to the embodiment.

Further, based on the process design in which the semiconductor power of the first continuous welding is 850W to 1,100W, in this embodiment, the semiconductor power of the first continuous welding may be 1,050W.

Optionally, in this embodiment, on the basis of the welding power of the first continuous welding being less than the welding power of the second continuous welding, the semiconductor power of the second continuous welding may be 1,150W to 1,300W, such as 1,150W, 1,200W, 1,250W, 1,300W, etc. In other embodiments, according to welding needs of the cover plate 100 and the shell 200 of different sizes (e.g., thickness) in different types of batteries, the semiconductor power of the second continuous welding may also be less than 1,150W or may be greater than 1,300W, such as 1,100W, 1,350W, etc., but is required to be greater than the semiconductor power of the first continuous welding, which is not limited to the embodiment.

Further, based on the process design in which the semiconductor power of the second continuous welding is 1,150W to 1,300W, in this embodiment, the semiconductor power of the second continuous welding may be 1,200W.

In this embodiment, a welding speed (e.g., a welding beam, that is, a moving speed of a welding head) of the first continuous welding is less than a welding speed of the second continuous welding.

Optionally, based on the process design in which the welding speed of the first continuous welding is less than the welding speed of the second continuous welding, in this embodiment, the welding speed of the first continuous welding may be 60mm/s to 80mm/s, such as 60mm/s, 65mm/s, 75mm/s, 80mm/s, etc. In other embodiments, the welding speed of the first continuous welding may also be less than 60mm/s or may be greater than 80mm/s, such as 55mm/s, 90mm/s, etc., which is not limited to the embodiment.

Further, based on the process design in which the welding speed of the first continuous welding is 60mm/s to 80mm/s, in this embodiment, the welding speed of the first continuous welding may be 70mm/s.

Optionally, based on the process design in which the welding speed of the first continuous welding is less than the welding speed of the second continuous welding, in this embodiment, the welding speed of the second continuous welding may be 90mm/s to 110mm/s, such as 90mm/s, 95mm/s, 105mm/s, 110mm/s, etc. In other embodiments, the welding speed of the second continuous welding may also be less than 90mm/s or may be greater than 110mm/s, such as 85mm/s, 115mm/s, etc., which is not limited to the embodiment.

Further, based on the process design in which the welding speed of the second continuous welding is 90mm/s to 110mm/s, in this embodiment, the welding speed of the second continuous welding may be 100mm/s.

As described above, in this embodiment, several mainstream thickness designs such as 0.5mm, 0.6mm, and 0.8mm are adopted for the shell 200 as examples for description, and aluminum or steel is adopted as a material for the shell 200 as an example for description. In other embodiments, when other thicknesses or materials are used for the shell, the aforementioned welding parameters may be flexibly adjusted, which are not limited to the embodiment.

It should be noted that in other embodiments, the welding method of the battery cover plate provided by the disclosure may also include three times or more continuous welding. Based on the above, the welding power of the first continuous welding shall be less than the welding power of any other continuous welding. For instance, the welding power of the first continuous welding may be a minimum value among the welding power of all of the continuous welding. Further, the welding power of the continuous welding may be increased sequentially.

For instance, in another embodiment of the disclosure, the welding method may include three times of continuous welding. The optical fiber power and the semiconductor power of the first continuous welding respectively are 400W and 860W, the optical fiber power and the semiconductor power of the second continuous welding respectively are 550W and 900W, and optical fiber power and semiconductor power of third continuous welding respectively are 600W and 1,000W. It thus can be seen that after three times of welding, the amount of deformation of the shell is 0.3mm. Through three times of welding of different power, the stiffness of the welded seam raises, such that pseudo welding may be effectively prevented, and the amount of deformation of the shell may be reduced.

### Embodiment Two

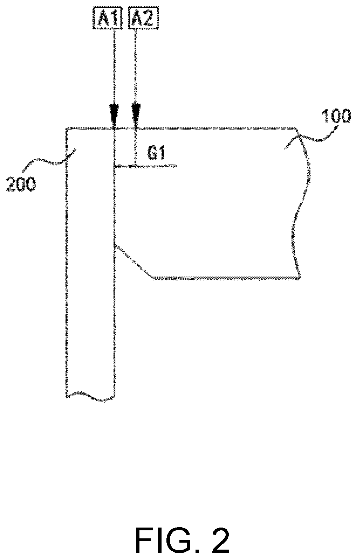

Based on the detailed description of the welding method of the battery cover plate of embodiment one provided by the disclosure, description of the welding method of the battery cover plate of embodiment two provided by the disclosure is stated as follows. With reference to FIG. 2, which represents a schematic view illustrating positions of two times of continuous welding on the cover plate 100 and the shell 200 in the welding method of the battery cover plate according to embodiment two of the disclosure. Hereinafter, the design of the welding method in embodiment two that is different from the design of embodiment one is to be described in combination with FIG. 2.

Optionally, as shown in FIG. 2, in this embodiment, in the step of performing the first continuous welding along the connecting zone between the cover plate 100 and the shell 200, a position A1 of the welding beam (e.g., laser beam) may be aligned with the connecting seam between the cover plate 100 and the shell 200 for continuous welding. For instance, before welding is performed, an alignment device (e.g., a charge-coupled image sensor (CCD)) may be used to scan the connecting seam. If the size is within the acceptable range, that is, it meets the "alignment" standard, welding may then be performed. Otherwise, the position may be adjusted until the "alignment" standard is met. Through the foregoing process design, in the disclosure, the process of welding performed to the connecting seam in the first continuous welding may allow an appearance of the welded seam not to generate pseudo welding or broken welding. The use of the first continuous welding having less power allows the cover plate 100 and the shell 200 to be fixed and causes no damage to the cell. Further, positioning may be accurately accomplished, and the shell 200 is prevented from being deformed.

Moreover, as shown in FIG. 2, based on the process design in which the position A1 of the welding beam is aligned with the connecting seam in the first continuous welding, in this embodiment, in the step of performing the second continuous welding along the connecting zone between the cover plate 100 and the shell 200, a position A2 of the welding beam may be aligned with a position of the cover plate 100 deviated from an edge of the cover plate 100 for welding. Herein, a gap G1 is defined between the position A2 and the edge of the cover plate 100, and the gap G1 of such deviation may be less than 0.5mm, such as 0.1mm, 0.3mm, 0.4mm, 0.5mm, etc. The second continuous welding has greater welding power. In the disclosure, a weld track is arranged at a position deviated from the edge of the cover plate 100 itself, and in this way, the shell 200 is prevented from being welded through when the second continuous welding is performed. Moreover, the cell inside the battery may not be damaged when the shell 200 is welded through or by the welded seam during the first continuous welding, such that the safety of the battery is improved, and the yield of welding is increased. In other embodiments, the gap G1 may also be greater than 0.5mm such as 0.6mm and the like, which is not limited to the embodiment.

Further, based on the process design that the gap G1 less than 0.5mm is provided between the weld track and the edge of the cover plate 100 during the second continuous welding, in this embodiment, the gap G1 may be 0.2mm.

Specifically, a specific application example of the welding method of the battery cover plate of the disclosure is provided as follows to illustrate the effects of the welding method of the battery cover plate provided by the disclosure.

Based on the process design of embodiment two, in this specific application example, main welding parameters of the first continuous welding and the second continuous welding are provided in the table below. The welding parameters may at least include the optical fiber power, the semiconductor power, the welding speed, and the gap between the weld track and the actual welded seam (the actual connecting seam between the cover plate and the shell).

Herein, take the shell 200 that has a 0.5mm thickness, and has a material including aluminum as the example. In the welding process based on the disclosure, environmental parameters of the first continuous welding are: the optical fiber power is 500W, the semiconductor power is 1,050W, the welding speed is 70mm/s, and a distance between the weld track and the welded seam is 0 (i.e., the "alignment" design of the first continuous welding in embodiment two). Based on the above, after the first continuous welding is performed, the shell generates a front indentation of 0.3mm and a rear indentation of 0.6mm. Next, environmental parameters of the second continuous welding are: the optical fiber power is 760W, the semiconductor power is 1,200W, the welding speed is 100mm/s, and the gap between the weld track and the edge of the cover plate is 0.2mm. Based on the above, after the second continuous welding is performed, the shell ultimately generates a front indentation of 0.65mm and a rear indentation of 1mm. Further, a penetration width of the welded seam zone is 1.486mm, an effective penetration depth is 1.064mm, and a maximum penetration depth is 1.25mm.

**Table 1: Welding Parameters and Battery Indentation Parameters of Embodiment Two of Disclosure**

| optical fiber power (W) | semicon ductor power (W) | welding speed (mm/s) | gap (mm ) | front indentati on(mm) | rear indentati on(mm) | penetration width (mm) | effective penetrati on depth (mm) | maximu m penetrati on depth (mm) |
|---|---|---|---|---|---|---|---|---|
| 500 | 1050 | 70 | 0 | 0.30 | 0.60 | 1.486 | 1.064 | 1.250 |
| 760 | 1200 | 100 | 0.2 | 0.65 | 1.00 | | | |

In the foregoing embodiments and the specific application example, the laser welding power, the welding speeds, and the defocusing amounts are adjusted. In this way, the amount of deformation of the shell 200 may be less than or equal to 0.6mm after the first continuous welding, and the amount of deformation of the shell 200 may be less than or equal to 1.0mm after the second continuous welding. The "amount of deformation of the shell 200" is, according to the present invention, the larger one between the front and rear indentations. In various possible embodiments in line with the design concept of the disclosure, for shells of various thicknesses or materials, the welding power for the second continuous welding may be 400W to 5,000W. The welding speed may be 40mm/s to 300mm/s. The defocusing amount may be greater than 0 and less than or equal to 5mm. In other embodiments, the aforementioned welding parameters may be flexibly adjusted, which are not limited to the embodiment.

It should be noted that in the above table 1, the values in the first row represent the welding parameters of the first continuous welding and battery indentation parameters after welding is performed. The values in the second row represent the welding parameters of the second continuous welding and the battery indentation parameters after welding is performed. The battery indentation parameters in the second row are the final indentation parameters generated by the battery after the two times of welding are completed, and these parameters are not required to be added with the indentation parameters of the first welding.

Based on the foregoing, in order to more clearly understand the effects of the welding method of the battery cover plate provided by the disclosure, a welding process provided by the related art is described below.

As shown in the table below, the welding process provided by the related art uses one time of continuous welding. In order to reflect the difference between the disclosure and the design provided by the related art, the environmental parameters of the second continuous welding in the above specific application example of the disclosure are treated as the welding parameters of the welding process provided by the related art.

**Table 2: Welding Parameters and Battery Indentation Parameters of Related Art**

| optical fiber power (W) | semicon ductor power (W) | welding speed (mm/s) | gap (mm ) | front indentati on (mm) | rear indentati on (mm) | penetration width (mm) | effective penetrati on depth (mm) | maximu m penetrati on depth (mm) |
|---|---|---|---|---|---|---|---|---|
| 760 | 1200 | 100 | 0.2 | 0.90 | 1.40 | 1.536 | 1.004 | 1.191 |

It thus can be seen that in the process design of two times of continuous welding adopted by the disclosure, the first continuous welding with less welding power acts as pre-welding, and the second continuous welding with greater welding power acts as final welding. Compared to the welding method provided by the related art, in the disclosure, the indentations formed on the front and rear larger surfaces of the battery may be significantly reduced, and such reduction range may reach approximately 30%. Based on the above, since the flatness of the surface of the battery shell is optimized, the shell may be easily produced in the subsequent filming and module gluing processes. The yields of the filming and gluing processes may be improved, and scrapping may be reduced. Further, lithium precipitation caused by the indentations of the shell may be prevented from occurring, and safety of use and performance of the battery may also be improved.

### Embodiment Three

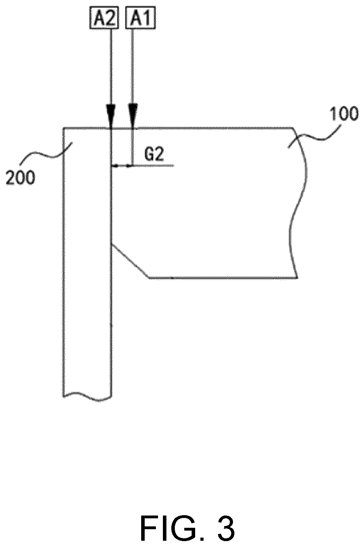

Based on the detailed description of the welding method of the battery cover plate of embodiment one and the embodiment two provided by the disclosure, description of the welding method of the battery cover plate of embodiment three provided by the disclosure is stated as follows. With reference to FIG. 3, which represents a schematic view illustrating positions of two times of continuous welding on the cover plate 100 and the shell 200 in the welding method of the battery cover plate according to embodiment three of the disclosure. Hereinafter, the design of the welding method in embodiment three that is different from the design of embodiment one and embodiment two is to be described in combination with FIG. 3.

Optionally, as shown in FIG. 3, in this embodiment, in the step of performing the first continuous welding along the connecting zone between the cover plate 100 and the shell 200, the position A1 of the welding beam may be aligned with the position of the cover plate 100 deviated from the edge of the cover plate 100 for continuous welding. Herein, a gap G2 is defined between the position A1 and the edge of the cover plate, and the gap G2 of deviation may be less than 0.3mm, such as 0.1mm, 0.2mm, 0.25mm, 0.3mm, etc. Accordingly, since the molten metal pool may be formed on the edge of the cover plate 100 during the welding process, metal slurries may flow to the connecting seam, so as to form the connection of the shell 200 and the cover plate 100, and thus the large surfaces of the battery shell 200 are prevented from being indented and deformed. In other embodiments, the gap G2 may be greater than 0.3mm such as 0.4mm and the like, which is not limited to the embodiment.

Moreover, as shown in FIG. 3, based on the process design in which the gap G2 less than 0.3mm is provided between the weld track and the edge of the cover plate 100 during the first continuous welding, in this embodiment, in the step of second continuous welding, the position A2 of the welding beam (e.g., laser beam) may be aligned with the edge of the cover plate 100 for continuous welding. Accordingly, since a specific welding layer is formed at the connecting seam during the first continuous welding, at this time, adoption of greater power to weld the welded position may allow connection and strength of welding to be further enhanced, and safety of the battery is thus further improved.

It is noted that, the welding method of the battery cover plate shown in the drawings and described in the specification are only a few examples of many types of the welding methods that may implement the principles of the present invention as define din the appended claims. It should be clearly understood that the principles of the disclosure are by no means limited to any details or any steps of the welding method of the battery cover plate shown in the drawings or described in the specification.

In view of the foregoing, in the welding method of the battery cover plate provided by the disclosure, the positions of the cover plate and the shell are fixed through the first continuous welding having less power, and overall welding of the cover plate and the shell is achieved through the second continuous welding having greater power. Through the foregoing design, in the disclosure, since the first continuous welding having less power is adopted, the second continuous welding having greater power may effectively alleviate deformation of the shell after welding is performed. The shell is thereby prevented from being welded through, and the cell is thus prevented from being damaged. Besides, the welded seam zone is well formed, high welding strength is provided, and safety of the battery is thus improved.

## Claims

1. A welding method of a battery cover plate, the welding method comprising:
performing at least two times of continuous welding along a connecting zone between a cover plate (100) and a shell (200), **characterized in that**:
the at least two times of continuous welding includes a first continuous welding acting as pre-welding, and a second continuous welding acting as final welding, the second continuous welding is performed after the first continuous welding, and welding power of the first continuous welding is less than welding power of the second continuous welding; and
the welding method further comprises adjusting laser welding power, welding speeds, and defocusing amounts, wherein a ratio of the welding power of the first continuous welding to the welding power of the second continuous welding is 0.3: 1 to 0.8: 1, such that an amount of deformation of the shell (200) is less than or equal to 0.6mm after the first continuous welding, and the amount of deformation of the shell (200) is less than or equal to 1.0mm after the second continuous welding, wherein the amount of deformation of the shell is defined as the larger one between a front indentation and a rear indentation, wherein the welding method comprises two times of welding, and a welding speed of the first continuous welding is less than a welding speed of the second continuous welding.

2. The welding method of the battery cover plate according to claim 1, wherein the first continuous welding comprises aligning a welding beam with a connecting seam between the cover plate (100) and the shell (200) for welding.

3. The welding method of the battery cover plate according to claim 1 or 2, wherein the second continuous welding comprises aligning the welding beam with a position of the cover plate (100) deviated from an edge of the cover plate (100) for welding, and a deviation gap (G1) between the position and the edge is less than 0.5mm.

4. The welding method of the battery cover plate according to claim 1, wherein the first continuous welding comprises aligning a welding beam with a position of the cover plate (100) deviated from an edge of the cover plate (100) for welding, and a deviation gap (G2) between the position and the edge is less than 0.3mm.

5. The welding method of the battery cover plate according to claim 1 or 4, wherein the second continuous welding comprises aligning the welding beam with an edge of the cover plate (100) for welding.

6. The welding method of the battery cover plate according to any one of claims 1, 2 and 4, wherein a range of penetration depth of the first continuous welding is 0.6mm to 0.8mm, and a range of penetration depth of the second continuous welding is greater than 0.8mm.

7. The welding method of the battery cover plate according to any one of claims 1, 2 and 4, wherein welding power parameters of continuous welding comprise optical fiber power, and a ratio of optical fiber power of the first continuous welding to optical fiber power of the second continuous welding is 0.3: 1 to 0.8: 1.

8. The welding method of the battery cover plate according to any one of claims 1, 2 and 4, wherein welding power parameters of continuous welding comprise optical fiber power, and optical fiber power of the first continuous welding is 400W to 600W, and optical fiber power of the second continuous welding is 650W to 850W.

## Patentansprüche

1. Schweißverfahren einer Batterieabdeckplatte, wobei das Schweißverfahren umfasst:
Durchführen von wenigstens zweimaligem kontinuierlichen Schweißen entlang einer Verbindungszone zwischen einer Abdeckplatte (100) und einem Gehäuse (200), **dadurch gekennzeichnet, dass**:
das wenigstens zweimaliges kontinuierliches Schweißen ein erstes kontinuierliches Schweißen, das als Vorschweißen wirkt, und ein zweites kontinuierliches Schweißen enthält, das als Endschweißen wirkt, das zweite kontinuierliche Schweißen nach dem ersten kontinuierlichen Schweißen durchgeführt wird und eine Schweißleistung des ersten kontinuierlichen Schweißens geringer als eine Schweißleistung des zweiten kontinuierlichen Schweißens ist; und
das Schweißverfahren ferner Einstellen von Laserschweißleistung, Schweißgeschwindigkeiten und Defokussierungsmengen umfasst,
wobei ein Verhältnis der Schweißleistung des ersten kontinuierlichen Schweißens zu der Schweißleistung des zweiten kontinuierlichen Schweißens 0,3: 1 bis 0,8: 1 beträgt, so dass ein Betrag der Verformung des Gehäuses (200) weniger als oder gleich 0,6 mm nach dem ersten kontinuierlichen Schweißen ist und der Betrag der Verformung des Gehäuses (200) weniger als oder gleich 1,0 mm nach dem zweiten kontinuierlichen Schweißen ist, wobei der Betrag der Verformung des Gehäuses als das größere zwischen einer vorderen Vertiefung und einer hinteren Vertiefung definiert ist, wobei das Schweißverfahren ferner zweimaliges Schweißen umfasst und eine Schweißgeschwindigkeit des ersten kontinuierlichen Schweißens geringer als eine Schweißgeschwindigkeit des zweiten kontinuierlichen Schweißens ist.

2. Schweißverfahren der Batterieabdeckplatte gemäß Anspruch 1, wobei das erste kontinuierliche Schweißen Ausrichten eines Schweißstrahls auf eine Verbindungsnaht zwischen der Abdeckplatte (100) und dem Gehäuse (200) zum Schweißen umfasst.

3. Schweißverfahren der Batterieabdeckplatte gemäß Anspruch 1 oder 2, wobei das zweite kontinuierliche Schweißen Ausrichten des Schweißstrahls auf eine von einer Kante der Abdeckplatte (100) abweichende Position der Abdeckplatte (100) zum Schweißen umfasst und ein Abweichungsspalt (G1) zwischen der Position und der Kante weniger als 0,5 mm beträgt.

4. Schweißverfahren der Batterieabdeckplatte gemäß Anspruch 1, wobei das erste kontinuierliche Schweißen Ausrichten eines Schweißstrahls auf eine Position der Abdeckplatte (100) umfasst, die von einer Kante der Abdeckplatte (100) zum Schweißen abweicht, und ein Abweichungsspalt (G2) zwischen der Position und der Kante weniger als 0,3 mm beträgt.

5. Schweißverfahren der Batterieabdeckplatte gemäß Anspruch 1 oder 4, wobei das zweite kontinuierliche Schweißen Ausrichten des Schweißstrahls auf eine Kante der Abdeckplatte (100) zum Schweißen umfasst.

6. Schweißverfahren der Batterieabdeckplatte gemäß einem der Ansprüche 1, 2 und 4, wobei ein Bereich der Eindringtiefe des ersten kontinuierlichen Schweißens 0,6 mm bis 0,8 mm und ein Bereich der Eindringtiefe des zweiten kontinuierlichen Schweißens mehr als 0,8 mm beträgt.

7. Schweißverfahren der Batterieabdeckplatte gemäß einem der Ansprüche 1, 2 und 4, wobei Schweißleistungsparameter des kontinuierlichen Schweißens Leistung der optischen Faser umfassen und ein Verhältnis der Leistung der optischen Faser des ersten kontinuierlichen Schweißens zu der Leistung der optischen Faser des zweiten kontinuierlichen Schweißens 0,3: 1 bis 0,8: 1 beträgt.

8. Schweißverfahren der Batterieabdeckplatte gemäß einem der Ansprüche 1, 2 und 4, wobei Schweißleistungsparameter des kontinuierlichen Schweißens die Leistung der optischen Faser umfassen und die Leistung der optischen Faser des ersten kontinuierlichen Schweißens 400 W bis 600 W und die Leistung der optischen Faser des zweiten kontinuierlichen Schweißens 650 W bis 850 W beträgt.

## Revendications

1. Procédé de soudage d'une plaque de recouvrement de batterie, le procédé de soudage comprenant :
l'exécution d'au moins deux temps de soudage continu le long d'une zone de connexion entre une plaque de recouvrement (100) et une coque (200), **caractérisé en ce que** :
le soudage continu à au moins deux reprises comprend un premier soudage continu agissant en tant que pré-soudage, et un deuxième soudage continu agissant en tant que soudage final, le deuxième soudage continu est effectué après le premier soudage continu, et la puissance de soudage du premier soudage continu est inférieure à la puissance de soudage du deuxième soudage continu ; et
le procédé de soudage comprend en outre le réglage de la puissance de soudage du laser, des vitesses de soudage et des quantités de défocalisation,
dans lequel le rapport entre la puissance de soudage du premier soudage continu et la puissance de soudage du deuxième soudage continu est compris entre 0,3:1 et 0,8:1, de telle sorte que la déformation de la coque (200) est inférieure ou égale à 0,6 mm après le premier soudage continu et que la déformation de la coque (200) est inférieure ou égale à 1,0 mm après le deuxième soudage continu, dans lequel la quantité de déformation de la coque est définie comme étant la plus grande entre une indentation arrière, dans lequel le procédé de soudage comprend deux temps de soudage, et une vitesse de soudage du premier soudage continu est inférieure à une vitesse de soudage du deuxième soudage continu.

2. Procédé de soudage de la plaque de recouvrement de la batterie selon la revendication 1, dans lequel le premier soudage continu comprend l'alignement d'un faisceau de soudage avec un joint de raccordement entre la plaque de recouvrement (100) et la coque (200) pour le soudage.

3. Procédé de soudage de la plaque de protection de la batterie selon la revendication 1 ou la revendication 2, dans lequel le second soudage continu comprend l'alignement du faisceau de soudage avec une position de la plaque de protection (100) déviée d'un bord de la plaque de protection (100) pour le soudage, et un écart de déviation (G1) entre la position et le bord est inférieur à 0,5 mm.

4. Procédé de soudage de la plaque de recouvrement de batterie selon la revendication 1, dans lequel le premier soudage continu comprend l'alignement d'un faisceau de soudage avec une position de la plaque de recouvrement (100) déviée d'un bord de la plaque de recouvrement (100) pour le soudage, et un écart de déviation (G2) entre la position et le bord est inférieur à 0,3 mm.

5. Procédé de soudage de la plaque de recouvrement de batterie selon la revendication 1 ou la revendication 4, dans lequel le deuxième soudage continu comprend l'alignement du faisceau de soudage avec un bord de la plaque de recouvrement (100) pour le soudage.

6. Procédé de soudage de la plaque de recouvrement de la batterie selon l'une quelconque des revendications 1, 2 et 4, dans lequel une plage de profondeur de pénétration du premier soudage continu est comprise entre 0,6 mm et 0,8 mm, et une plage de profondeur de pénétration du deuxième soudage continu est supérieure à 0,8 mm.

7. Procédé de soudage du couvercle de batterie selon l'une quelconque des revendications 1, 2 et 4, dans lequel les paramètres de puissance de soudage du soudage continu comprennent la puissance de la fibre optique, et un rapport de la puissance de la fibre optique du premier soudage continu à la puissance de la fibre optique du deuxième soudage continu est compris entre 0,3:1 et 0,8:1.

8. Procédé de soudage de la plaque de recouvrement de la batterie selon l'une quelconque des revendications 1, 2 et 4, dans lequel les paramètres de puissance de soudage du soudage continu comprennent la puissance de la fibre optique, et la puissance de la fibre optique du premier soudage continu est comprise entre 400 W et 600 W, et la puissance de la fibre optique du deuxième soudage continu est comprise entre 650 W et 850 W.
